# EUROPÄISCHE PATENTSCHRIFT

(11) **EP 1 336 722 B1**
(45) Veröffentlichungstag und Bekanntmachung des Hinweises auf die Patenterteilung: **06.06.2007**
(21) Anmeldenummer: 03001880.8
(22) Anmeldetag: 29.01.2003
(51) Int. Cl.: F01B 3/00, F04B 1/12, F16C 11/06, F16B 5/12

(54) **Gelenkverbindung und Verfahren zum Herstellen der Gelenkverbindung**
Linkage and method for producing same
Tringlerie et son procédé de fabrication

(30) Priorität: 15.02.2002 DE 10206382
(43) Veröffentlichungstag der Anmeldung: 20.08.2003
(73) Patentinhaber: Brueninghaus Hydromatik GmbH, 89275 Elchingen (DE)
(72) Erfinder: Hoppe, Stefan, 72172 Sulz a. N. (DE); Donders, Steven, Dr., 72401 Haigerloch (DE)
(74) Vertreter: Körfer, Thomas

(56) Entgegenhaltungen:
- DE-A- 19 712 838
- DE-A- 19 732 517
- DE-A- 19 859 199
- US-A- 4 236 429
- W.BEITZ UND K.-H.GROTE: "DUBBEL,taschenbuch für den maschinenbau" 2001, SPRINGER , HEIDELBERG 270810 , XP002255055 * Seite G37, Spalte 2, Absatz 1 - Absatz [0002]; Abbildungen 49,50 *

## Beschreibung

Die Erfindung betrifft eine Gelenkverbindung zwischen einem Schaft und einem Gleitschuh einer Kolbenmaschine nach dem Oberbegriff des Anspruchs 1 und ein Verfahren zum Herstellen der Gelenkverbindung nach dem Oberbegriff des Anspruchs 14.

Eine Gelenkverbindung und ein Verfahren dieser Arten sind in der DE 197 12 838 A1 beschrieben.

Bei Axialkolbenmaschinen in Schrägscheibenbauweise stützen sich die in Zylinderbohrungen bewegbaren Zylinderkolben über jeweils einen Gleitschuh an der Gleitfläche einer Schrägscheibe ab. Dabei ist es üblich, die Zylinderkolben mit den Gleitschuhen mittels einer Kugelgelenkverbindung zu verbinden, um in jeder Schrägstellung der Schrägscheibe eine flächige Anlage der Gleitsohle der Gleitschuhe an der Gleitfläche der Schrägscheibe zu gewährleisten.

Eine Gelenkverbindung der eingangs angegebenen Art wird auch für die gelenkige Abstützung von Verstellschäften zum Verstellen von Kolbenmaschinen eingesetzt.

Bei der Herstellung der Kugelgelenkverbindung ist es üblich, den an dem Gleitschuh oder dem Zylinderkolben angeformten Kugelkopf in eine abgerundete Ausnehmung des entsprechenden Gegenstücks, also des Zylinderkolbens bzw. Gleitschuhs, einzusetzen. Die Ausnehmung ist dabei nur in einem Raumwinkelbereich von etwa 180° als Halb-Hohlkugel abgerundet. An diesen halbkugelförmigen Bereich der Ausnehmung schließt sich ein hohlzylinderförmiger Bereich an, der an einer Öffnung ausmündet. Der Öffnungsdurchmesser an der Öffnung der Ausnehmung entspricht dem Durchmesser im Bereich der Äquatorebene des halb-hohlkugelförmigen Bereichs der Ausnehmung. Beim Zusammenfügen des Gleitschuhs und des Zylinderkolbens wird der an einem der beiden Teile angeformte Kugelkopf in die Ausnehmung eingeführt und in der Ausnehmung formschlüssig verankert. Dies ist notwendig, damit über die Kugelgelenkverbindung während des Saughubs der Kolbenmaschine eine entsprechende Zugkraft übertragbar ist.

Bei der eingangs angegebenen bekannten Gelenkverbindung und dem bekannten Verfahren wird die den kugelförmigen Kopf aufnehmende Ausnehmung an dem einen Gelenkteil in einer sich über den Äquator hinaus erstreckenden kugelabschnittförmigen Form vorgefertigt. Das heißt, die Ausnehmung verjüngt sich ausgehend von ihrem Äquator zur Öffnung der Ausnehmung hin. Mit diesem verjüngten Bereich hintergreift das die Ausnehmung aufweisende Gelenkteil den in die Ausnehmung eingesetzten kugelförmigen Kopf hinter dessen Äquator. Hierdurch ist der Kopf in der Ausnehmung formschlüssig gehalten, und kann deshalb nicht aus der Ausnehmung herausgezogen werden. Um den Kopf in die Ausnehmung einführen zu können, wird der Kopf als Zwischenprodukt mit einer in seinem Äquatorbereich angeordneten Abflachung vorgefertigt, deren Durchmesser so an den Durchmesser des verjüngten Ausnehmungsbereichs angepaßt ist, daß der Kopf in die Ausnehmung einführbar ist. In dieser zusammengeführten Position wird der Kopf im Bereich seiner Abflachung durch plastische Verformung von innen radial nach außen durch Dehnen verformt, bis er in seinem Äquatorbereich im wesentlichen Kugelform erreicht hat. Hierdurch hintergreift der verjüngte Randbereich der Ausnehmung den kugelförmigen Kopf formschlüssig, so daß ein Auseinanderziehen der Teile der Gelenkverbindung formschlüssig verhindert ist. Das radiale Dehnen des Kopfes wird dadurch realisiert, daß beim Zwischenprodukt ein Innenwulst in einem Loch des Kopfes im Äquatorbereich belassen wird, der nach dem Zusammenführen der Gelenkteile durch einen Spreizdorn geweitet und dabei radial nach außen soweit verformt wird, daß der Materialfluß am Umfang des Kopfes in dessen Äquatorbereich stattfindet und die Abflachung durch radiale Ausdehnung in eine möglichst kugelabschnittförmige Form verformt wird.

Diese bekannte Ausgestaltung und dieses bekannte Verfahren haben sich als brauchbare Lösungen erwiesen, jedoch wird das angestrebte Ziel, eine möglichst kugelabschnittförmige Form für den Kopf zu erreichen nicht zufriedenstellend erreicht. Die Folge ist, daß die Abflachung nur geringförmig verringert wird, wodurch sich eine erhöhte Flächenpressung und ein erhöhter Verschleiß ergeben.

Der Erfindung liegt die Aufgabe zugrunde, bei einer Gelenkverbindung und einem Verfahren zum Herstellen der Gelenkverbindung der eingangs eingegebenen Arten die Formgebung des Kugelkopfes zu verbessern. Dabei soll die Kugelform des Kopfabschnitts im Äquatorbereich vom Randbereich der Ausnehmung möglichst weit oder möglichst viel hintergriffen werden.

Diese Aufgabe wird bezüglich der Gelenkverbindung durch die Merkmale des Anspruchs 1 und bezüglich des Herstellungsverfahrens durch die Merkmale des Anspruchs 14 gelöst. Vorteilhafte Weiterbildungen sind in den zugehörigen Unteransprüchen beschrieben.

Bei der erfindungsgemäßen Gelenkverbindung ist der radial gedehnte Kopfabschnitt in seinem äußeren Elastitätsbereich durch ein im Loch des Kopfes axial positioniertes Stützteil radial gestützt, so daß dieser radiale Kopfabschnitt nicht in seinen inneren Elastitätsbereich zurückfedern kann. Hierdurch wird eine der angestrebten kugelabschnittförmigen Form mehr angenäherte Form für den Kopfabschnitt erreicht. Infolge dessen wird auch die kugelabschnittförmige Fläche des Kopfabschnitts vermehrt an die Kugelform der Ausnehmung angenähert, so daß im Funktionsbetrieb aufgrund vergrößerter Flächenanlage eine geringere Flächenpressung und ein verringerter Verschleiß sowie eine vergrößerte Lebensdauer erreicht werden.

Der Erfindung liegt die Erkenntnis zugrunde, daß beim Stand der Technik der Kopfabschnitt nach dem Herausziehen des Aufweitdornwerkzeugs aus dem Kopf in seinen Elastizitätsbereich radial einwärts zurückfedert und hierdurch sowohl die Größe verringert als auch die Form des Kopfabschnitts verschlechtert wird. Es ergibt sich auch ein größerer Abstand zwischen den einander gegenüberliegenden Gleitflächen im Kopfbereich. Beim Stand der Technik ist die erfindungsgemäße Gelenkverbindung und das erfindungsgemäße Verfahren nicht möglich, da ein Aufweitwerkzeug verwendet wird, das für einen Verbleib im Kopf als integraler Bestandteil des Kugelkopfes nicht geeignet ist.

Bei der erfindungsgemäßen Ausgestaltung bedarf es dagegen keines besonderen Aufweitwerkzeugs. Dieses wird durch das Stützteil gebildet, das somit sowohl die Funktion des Aufweitens als auch die Funktion des Stützens übernimmt und diese Maßnahmen gleichzeitig ausführt.

Die erfindungsgemäße Ausgestaltung eignet sich vorzüglich für einen axial hin- und herbewegbaren Schaft einer Kolbenmaschine, insbesondere einer Axialkolbenmaschine. Bei einem solchen Schaft kann es sich um wenigstens einen Arbeitskolben handeln, der durch seine Hin- und Herbewegung in den Durchgang des Arbeitsfluids einbezogen ist. Es kann sich jedoch auch um einen Schaft oder eine Stange oder einen Kolben zum Verstellen des Durchsatzvolumens einer Kolbenmaschine handeln. Ein solcher Verstellkolben, der durch eine Gelenkverbindung mit einem Gleitschuh oder Stützschuh verbunden ist, ist z. B. in der Fig. 1 der DE 198 59 199 A1 dargestellt.

Der Gelenkkopf führt im Funktionsbetrieb der Kolbenmaschine axiale Hin- und Herbewegungen aus, die beträchtliche Trägheitskräfte erzeugen. Deshalb ist eine Positionierung bzw. Fixierung des Stützteils im Loch des Kugelkopfes vorteilhaft. Hierbei ergibt sich der weitere Vorteil, daß aufgrund der radialen Kontraktion, den der Kopfabschnitt auf das Stützteil ausübt, das Stützteil kraftschlüssig daran gehindert ist, auch bei beträchtlichen Axialkräften axial zu verrutschen. Von besonderem Vorteil ist eine formschlüssig wirksame axiale Positionierung des Stützteils an einer Schulterfläche. Die Anlage an der Schulterfläche kann durch die vorhandene Preßpassung oder durch die Preßpassung zwischen einem erweiterten Stützteilabschnitt und einem erweiterten Wandabschnitt des Loches geschaffen sein. Es ist auch möglich, das Stützteil im Sinne einer z. B. sägezahnförmigen Verrastung in seiner gewünschten axialen Position zu fixieren.

Die Erfindung ermöglicht eine einfache, kleine und stabile Bauweise, die störungsfrei funktioniert und von langer Lebensdauer ist.

Weitere Merkmale beziehen sich auf ein vorteilhaftes Einführen des Stützteils in das Loch des Kopfes, was wahlweise von beiden axialen Seiten her erfolgen kann, wozu besondere Ausgestaltung- und Verfahrensmerkmale angegeben werden.

Nachfolgend werden vorteilhafte Ausgestaltungs- bzw. Verfahrensmerkmale der Erfindung anhand von bevorzugten Ausgestaltungen bzw. Verfahren beschrieben. Es zeigt:
- Fig. 1: eine erfindungsgemäße Gelenkverbindung zwischen einem Schaft und einem Gleitschuh einer Kolbenmaschine, insbesondere einer Axialkolbenmaschine, in der Seitenansicht, teilweise axial geschnitten;
- Fig. 2: eine erfindungsgemäße Gelenkverbindung in abgewandelter Ausgestaltung;
- Fig. 3: den gelenkseitigen Endbereich eines Kolbens nach Fig. 2 in vergrößerter, geschnittener Darstellung;
- Fig. 4: einen Gleitschuh der Gelenkverbindung nach Fig. 2 in der Schnittansicht;
- Fig. 5: ein Stützteil für den Kopf der Gelenkverbindung in der Schnittansicht;
- Fig. 6: die Einzelteile der Gelenkverbindung nach Fig. 3 bis 5 im zusammengebauten Zustand;
- Fig. 7: eine erfindungsgemäße Gelenkverbindung im axialen Schnitt in einem Zwischenstadium ihrer Herstellung;
- Fig. 8: die Gelenkverbindung nach Fig. 7 im Endstadium ihrer Herstellung;
- Fig. 9: eine erfindungsgemäße Gelenkverbindung in abgewandelter Ausgestaltung in einem Zwischenstadium seiner Herstellung; und
- Fig. 10: die Gelenkverbindung nach Fig. 9 im Endstadium ihrer Herstellung.

Die in ihrer Gesamtheit mit A bezeichnete Gelenkverbindung dient dazu, zwei Bauteile raumgelenkig so miteinander zu verbinden, daß die Bauteile im Bereich eines Raumwinkels W relativ zueinander allseitig schwenkbar sind. Beim vorliegenden Ausführungsbeispiel sind die Bauteile durch einen Kolben 1 der Kolbenmaschine, insbesondere einer Axialkolbenmaschine, und einem Gleitschuh 10 gebildet, der bezüglich des Kolbens 1 axial an einem Widerlager 13 abgestützt ist, das beim Ausführungsbeispiel durch eine Schrägscheibe gebildet ist, an deren Schrägfläche 13a der Gleitschuh 10 mit seiner ebenen Fußfläche 10a im Funktionsbetrieb gleitend anliegt, wie es an sich bekannt ist.

Die Gelenkverbindung A weist einen Kugelkopf 11 an dem einen Bauteil und eine Ausnehmung 2 an dem anderen Bauteil auf, wobei der Kugelkopf 11 in der Ausnehmung 2 allseitig schwenkbar gelagert ist, und wobei der Kugelkopf 11 vom Randbereich 6 der Ausnehmung 2 hintergriffen ist, so daß er formschlüssig in der Ausnehmung 2 aufgenommen ist und ein Trennen der Bauteile voneinander verhindert ist. Diese Gelenkverbindung A ist hauptsächlich dafür eingerichtet, Druckkräfte von dem einen Bauteil auf das andere Bauteil zu übertragen. Aufgrund des formschlüssigen Übergriffes des Kugelkopfes 11 kann die Gelenkverbindung A auch im wesentlichen axiale Zugkräfte übertragen, deren maximale Größe jedoch geringer ist, als die vorerwähnten Druckkräfte.

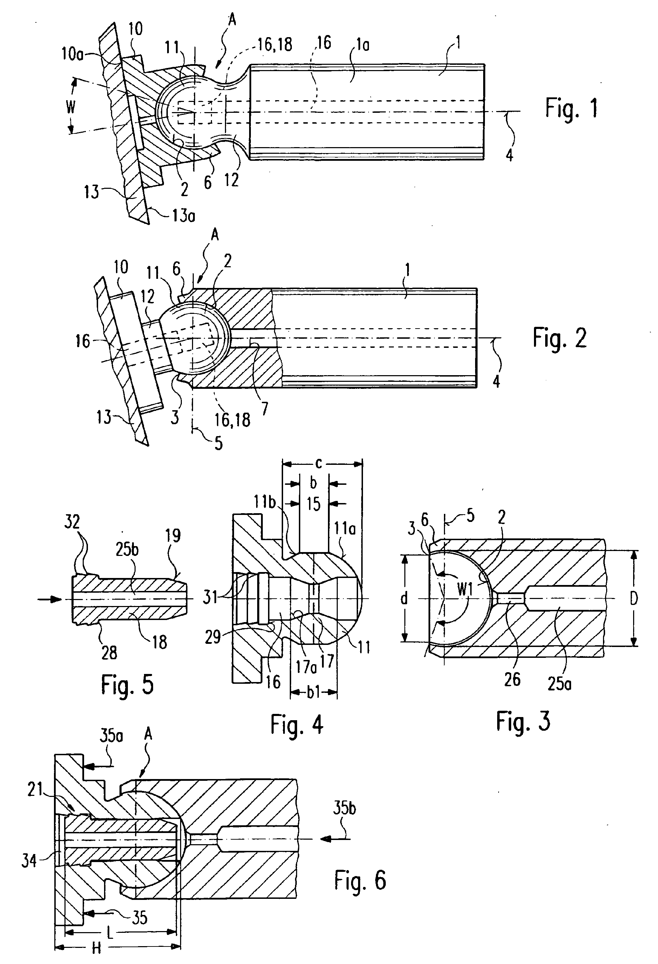

Beim Ausführungsbeispiel gemäß Fig. 1 ist der Kugelkopf 11 durch einen z. B. taillierten Hals 12 mit dem Schaft 1a des Kolbens 1 verbunden, vorzugsweise einteilig daran angeformt. Beim Ausführungsbeispiel nach Fig. 2, bei dem gleiche oder vergleichbare Teile mit gleichen Bezugszeichen versehen sind, ist der Kugelkopf 11 durch den Hals 12 mit dem Gleitschuh 10 verbunden, vorzugsweise einteilig daran ausgebildet. Folglich ist beim Ausführungsbeispiel nach Fig. 1 die Ausnehmung 2 im Gleitschuh 10 angeordnet, während die Ausnehmung 2 beim Ausführungsbeispiel gemäß Fig. 2 im hinteren Endbereich des Kolbens 1 angeordnet ist.

Bei der vorerwähnten Axialkolbenmaschine handelt es sich vorzugsweise um eine solche in Schrägscheibenbauweise, vorzugsweise mit einer in einem Gehäuse drehbar gelagerten Zylindertrommel mit mehreren auf dem Umfang verteilt angeordneten etwa axialen Kolbenlöchern, in denen eine entsprechende Anzahl Kolben 1 axial hin- und herverschiebbar gelagert sind.

Der in Fig. 3 als Einzelteil dargestellte Kolben 1 weist an seinem hinteren Ende, die kalottenförmige bzw. teilkugelförmige Ausnehmung 2 auf, die an der Stirnseite des Kolbens 1 an einer Öffnung 3 offen ist. Dabei ist die Ausnehmung 2 so hinterschnitten, daß die kalottenförmige Ausnehmung 2 einen Raumwinkelbereich W1 von mehr als 180° umfaßt (W1>180°). Anders ausgedrückt ist der Durchmesser d der Öffnung 3 kleiner bemessen als der Durchmesser D der Ausnehmung 2 im Bereich der sich rechtwinklig zu der Längsachse 4 erstreckenden Äquatorebene 5. Zur Verdeutlichung sind der Öffnungsdurchmesser d und der Durchmesser D der Ausnehmung 2 im Bereich der Äquatorebene 5 in Fig. 3 eingezeichnet. Zwischen der Äquatorebene 5 und der Öffnung 3 weist die kalottenförmige Ausnehmung 2 den Randbereich 6 auf. Der Kolben 1 kann homogen aus einem z. B. elastisch verformbaren Material, insbesondere mittels einer Wärmebehandlung aus nitriertem Stahl, gefertigt sein. Im Gegensatz zum aus dem Stand der Technik bekannten Umbördelungsverfahren zum Umbördeln des Randbereichs 6, kommt es bei dem erfindungsgemäßen Verfahren nicht auf die plastische Verformbarkeit des Randbereichs 6 an. Der Kolben 1 kann bei der Nitrierung daher einer homogenen, gleichmäßigen Wärmebehandlung unterworfen werden, ohne daß der Randbereich 6 der Ausnehmung 2 von dieser Behandlung ausgenommen werden muß und ein dafür notwendiger Mehraufwand notwendig würde.

Das den Kugelkopf 11 aufweisende Bauteil wird bei dem jeweiligen Ausführungsbeispiel mit einer vorzugsweise in der Äquatorebene 5 angeordneten und sich über ihren gesamten Umfang erstreckenden Abflachung 15 vorgefertigt, die z. B. zylindrisch ausgebildet sein kann und im Querschnitt so groß bemessen ist, daß der Kugelkopf 11 in die Ausnehmung 2 einführbar ist. Hierbei kann der Durchmesser der Abflachung 15 unter Berücksichtigung eines Bewegungsspiels an den Öffnungsdurchmesser d angepaßt sein. Die in Fig. 4 rechts neben der Abflachung 15 befindliche Kugelzone 11a und gegebenenfalls auch die gegenüberliegende Kugelzone 11b sind an den Durchmesser D und somit auch an die Krümmung der Ausnehmung 2 angepaßt. Der formschlüssige Hintergriff wird dadurch erreicht, daß der Kugelkopf im Bereich der Abflachung 15 so verformt wird, daß die Tiefe der Abflachung 15 verringert wird und zwar wenigstens auf einen Durchmesser, der größer ist als der Öffnungsdurchmesser d und vorzugsweise im wesentlichen dem Kugeldurchmesser D und der Kugelform entspricht. Dies wird dadurch erreicht, daß der Kugelkopf etwa parallel zur Mittelebene der Abflachung 15 bzw. parallel zum Äquator 5 gedehnt wird. Dies läßt sich auf verschiedene Weisen erreichen, die in der vorgenannten Druckschrift DE 197 12 838 A1 beschrieben sind.

Bei den vorliegenden Ausführungsbeispielen ist in einem axialen Loch 16 im Kugelkopf 11 etwa in der sich parallel zur Fußfläche 10a erstreckenden Äquatorebene E eine Ringerhebung 17 vorgefertigt, die eine Verringerung der lichten Weite des Loches 16 bildet. Durch ein Verformen der Ringerhebung 17 radial nach außen läßt sich der gesamte Querschnittsbereich des Kugelkopfes 11 im Bereich der Abflachung 15 radial nach außen verdrängen, wodurch die angestrebte Verringerung der Abflachung 15 erreicht wird. Beim vorliegenden Ausführungsbeispiel erfolgt dies dadurch, daß ein Aufweitstopfen 18 in das Loch 16 eingeschoben wird, der an seinem vorderen Ende eine konvergente, insbesondere kegelstumpfförmige, Verdrängungsfläche 19 aufweist, die beim Einschieben die Ringerhebung 17 das darauf befindliche Material des Kugelkopfes 11 im Bereich der Abflachung 15 radial nach außen bewegt, wobei die Abflachung 15 verringert wird. Um unter Berücksichtigung einer Materialstauchung genügend Material im Bereich der Abflachung 15 zur Verfügung zu haben, ist es vorteilhaft, die Ringerhebung 17 mit einer axialen Breite bl vorzufertigen, die größer als die Breite b der Abflachung 15 und kleiner ist als die axiale Abmessung c des Kugelkopfes 11.

Um eine möglichst geringe Flächenpressung im Bereich der sphärischen Lagerfläche und einen möglichst geringen Verschleiß sowie eine große Belastbarkeit des Kugelgelenks zu erhalten, ist es vorteilhaft, die Abflachung 15 so weit zu verringern bzw. völlig zu beseitigen, so daß die Form und Größe der Kugel der Form und Größe der Ausnehmung 2 möglichst entspricht. Dies ist in der Praxis aufgrund der Elastizität des Materials des Kugelkopfes 11 jedoch nicht möglich. Hierbei ist zu berücksichtigen, daß das Material sich erst bei einer Verformung über eine Elastizitätsgrenze hinaus bleibend bzw. plastisch verformt und aufgrund der Elastizität nach Fortfall der Verformungskraft geringfügig zurückfedert. Wenn deshalb der Aufweitstopfen nach der radialen Verformung aus dem Loch 16 herausgezogen wird, vergrößert sich die Abflachung 15 durch ein Zurückfedern, d.h. durch eine radial einwärts gerichtete Bewegung des Kugelkopfmaterials im Elastizitätsbereich, wodurch die Abflachung 15 wieder vergrößert wird.

Bei der Erfindung wird ein Aufweitstopfen 18 verwendet, der nach der Verformung bzw. Dehnung im Kugelkopf 11 verbleiben kann und dadurch das verformte bzw. gedehnte Material gegen ein Zurückfedern im Elastizitätsbereich stützt. Hierdurch läßt sich die verformte und somit geringere Größe der Abflachung 15 beibehalten.

Um den Aufweitstopfen 18 im Kugelkopf 11 bleibend anordnen zu können, ist es vorteilhaft, seine Länge L nicht größer als das den Kugelkopf 11 tragende Bauteil auszubilden, bei dem es sich um den Kolben 1 oder den Gleitschuh 10 handeln kann. Hierbei kann die Länge des Aufweitstopfens 18 etwa dem Durchmesser des Kugelkopfes 11 entsprechen oder auch größer bemessen sein. Beim Ausführungsbeispiel nach Fig. 4 ist die Länge L des Aufweitstopfens 18 gleich oder kleiner bemessen als die Höhe H des Gleitschuhs 10.

Aufgrund der vorbeschriebenen Materialelastizität übt das verformte Material des Kugelkopfes 11 auf den Aufweitstopfens 18 einen radial einwärts gerichteten Druck aus, der den Aufweitstopfen 18 daran hindert, ungewollt aus seiner Stützstellung verschoben zu werden. Um dies jedoch auch nach einer Materialermüdung zu erreichen, ist es vorteilhaft, den Aufweitstopfen 18 durch eine Sicherungsvorrichtung 21 im Kugelkopf 11 bzw. im Loch 16 zu sichern. Hierfür eignet sich eine Verrastungsvorrichtung oder zusätzliche Klemmvorrichtung. Diese Vorrichtungen können in beide Axialrichtungen oder nur in einer Axialrichtung des Aufweitstopfens wirksam sein.

Nachfolgend werden Verfahrensschritte zum Herstellen der Gelenkverbindung A beschrieben.

Das den Kugelkopf 11 aufweisende Bauteil (Kolben 1, Gleitschuh 10) wird mit der Abflachung 15 und dem Loch 16 mit der Ringerhebung 17 vorgefertigt. Das die Ausnehmung 2 aufweisende Bauteil (Kolben 1, Gleitschuh 10) wird mit einem verjüngten, in der Zusammenbaustellung den Kugelkopf 11 hintergreifenden Randbereich 6 vorgefertigt.

Für eine Montage der Gelenkverbindung A werden der Kugelkopf 11 und die Ausnehmung 2 zusammengeführt.

Danach wird der Aufweitstopfen 18 von der der Ausnehmung 2 abgewandten Seite her in das Loch 16 eingeschoben und der Kugelkopf 11 im Sinne einer Verringerung der Abflachung 15 gedehnt, vorzugsweise soweit, daß die Abflachung 15 beseitigt ist und der Kugelkopf 11 seine Kugelform aufweist.

Der Aufweitstopfen 18 wird in der eingeschobenen Stellung als Stützteil 20 für das über seine Elastizitätsgrenze hinaus verformte Material des Kugelkopfs 11 belassen und vorzugsweise gleichzeitig formschlüssig oder kraftschlüssig gegen ein unbeabsichtigtes Herausziehen gesichert.

Der Aufweitstopfen 18 kann nach dem Einschieben auf eine das betreffende Gelenkteil nicht überragende Länge abgelängt werden oder er kann mit einer Länge L vorgefertigt werden, die kleiner oder gleich ist als die Höhe H des Gleitschuhs 10.

Vorzugsweise werden der Aufweitstopfen 18 und das Loch 16 mit formschlüssig miteinander zusammenwirkenden Verrastungselementen vorgefertigt.

Beim Ausführungsbeispiel nach Fig. 3 weist der Kolben 1 ein vorzugsweise koaxiales Durchgangsloch 25a auf, durch das im Funktionsbetrieb hydraulisches Medium zu den Kugelgelenkflächen strömen kann, um diese zu schmieren oder auch eine Druckentlastung aufzubauen. Vorzugsweise weist der Aufweitstopfen 18 ebenfalls ein axiales Durchgangsloch 25b auf, so daß das hydraulische Medium bis zur Fußfläche 10a des Gleitschuhs 10 strömen kann, wo es ebenfalls eine Schmierung oder Druckentlastung aufbauen kann, wie es an sich bekannt ist. Um die Mediumströmung zu drosseln, kann das Durchgangsloch 25a eine Querschnittsverjüngung aufweisen, die eine Drossel 26 bildet. Eine vergleichbare Drossel kann anstelle im Durchgangsloch 25a im Durchgangsloch 25b des Aufweitstopfens 18 vorgesehen sein.

Beim Ausführungsbeispiel nach Fig. 3 bis 6 ist der Kugelkopf 11 am Gleitschuh 10 angeordnet. Die Ringerhebung 17 weist auf der Seite, auf der der Aufweitstopfen 18 in das Loch 16 eingeschoben wird, eine konvergente, insbesondere kegelförmige Innenflanke 17a auf, an deren Form und Größe die kegelförmige Verdrängungsfläche 19 am vorderen Ende des Aufweitstopfens 18 angepaßt ist.

Um das Einschieben des Aufweitstopfens 18 in seine Endposition zu erleichtern, weist dieser eine Außenschulterfläche 28 auf, die in der eingeschobenen Endposition an einer Innenschulterfläche 29 anliegt, die beim Ausführungsbeispiel durch eine Stufe im Durchgangsloch 16 gebildet ist.

Die Sicherungsvorrichtung 21 ist vorzugsweise außerhalb des Kugelkopfes 11 angeordnet, z.B. im Bereich des Gleitschuhfußes, wo die Sicherungsvorrichtung 21 raumgünstig angeordnet werden kann.

Eine Sicherungsvorrichtung 21 in Form einer Verrastungsvorrichtung kann durch ein oder mehrere axial nebeneinander angeordnete Außenringvorsprünge 31 am Aufweitstopfen 18 und diesen in dessen Endposition gegenüberliegenden Innenringvorsprüngen 32 gebildet sein, daß zueinander gehörige Ringvorsprünge 31, 32 im Sinne einer Preßpassung ausgebildet sind und deshalb bei gegenseitiger Berührung oder Quetschung in eine hintereinanderliegende Position bringbar sind, in der sie sich gegenseitig verrasten. Die Querschnittsform der Ringvorsprünge 31, 32 ist vorzugsweise sägezahnförmig, wobei die geneigten Flanken der Sägezahnform nach innen konvergent sind.

Vorzugsweise ist die Sicherungsvorrichtung 21 bzw. sind die Ringvorsprünge 31, 32 an einem Flansch 33 des Aufweitstopfens 18 und in einer diesen aufnehmenden Erweiterung des Durchgangslochs 16 ausgebildet.

Das hintere Ende des Aufweitstopfens 18 endet vorzugsweise versenkt vor der Fußfläche 10a, wodurch eine Ausnehmung 34 gebildet ist, die der Druckentlastung dienen kann.

Für eine Verformung des Kugelkopfes 11 wird der Dorn 18 von der dem Kugelkopf 11 abgewandten Seite her in das vorzugsweise als Durchgangsloch ausgebildete Loch 16 eingeschoben, wobei die Schubkräfte durch entgegengesetzte und z.B. direkt am Fußteil des Gleitschuhs 10 wirksame Widerlager 35a oder ein über den Kolben 1 wirksames Widerlager 35b abgestützt werden können.

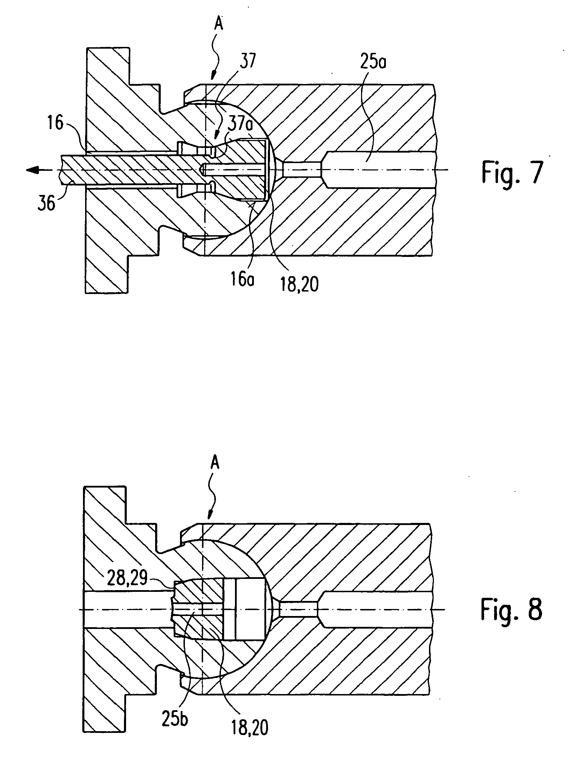

Im Gegensatz zum Ausführungsbeispiel nach Fig. 3 bis 6 ist es möglich, den Aufweitstopfen 18 von der der Fußfläche 10a abgewandten Seite her in das Loch 16 einzuführen und für den Verformungsvorgang einzuschieben. Bei dieser Ausgestaltung ist zwischen dem Scheitel des Kugelkopfes 11 und der Ringerhebung 17 ein Lochabschnitt 16a vorzugsweise vergrößerten Querschnitts solcher Länge vorhanden, daß der Aufweitstopfen 18 darin versenkt angeordnet und deshalb der Kugelkopf 11 und die Ausnehmung 2 zusammengeführt werden können. Ein weiteres Verschieben des Aufweitstopfens 18 für den Verformungsvorgang kann durch eine Zugausübung durch das Loch 16 hindurch von der dem Kopf abgewandten Seite her erfolgen. Hierzu ist eine mit dem Aufweitstopfen 18 verbundene Zugstange 36 vorgesehen, an der eine nicht dargestellte Zugvorrichtung angreifen kann, um den Aufweitstopfen 18 in seine Verformungsendstellung gemäß Fig. 8 zu ziehen. Vorzugsweise ist auch bei dieser Ausgestaltung ein Bewegungsanschlag für die Endposition vorgesehen. Dieser kann durch eine Außenschulterfläche 28 zwischen dem Aufweitstopfen 18 und der Zugstange 36 sowie eine Innenschulterfläche 29 im Loch 26 gebildet sein.

Die Zugstange 36 kann lösbar mit dem Aufweitstopfen 18 verbunden sein, um sie nach dem Bewegen des Aufweitstopfens 18 in seine Verformungsendstellung trennen und entfernen zu können. Hierzu kann eine z.B. durch eine Ringnut 37 gebildete Sollbruchstelle vorgesehen sein, die im Bereich des Gleitschuhs 10 angeordnet sein kann und vorzugsweise im Übergangsbereich zwischen der Zugstange 36 und dem Aufweitstopfen 18 angeordnet ist. Die Sollbruchstelle 37 kann eine Zugkraft übertragen, die größer ist, als die zum Verformen erforderliche Zugkraft. Nach dem Verformen kann deshalb durch eine erhöhte Zugkraft und/oder eine Radialoder Torsionskraft das Abreißen der Zugstange 36 herbeigeführt werden (Fig. 8).

Beim Ausführungsbeispiel nach Fig. 7 und 8 ist eine vorbeschriebene Drossel 26 durch ein verjüngtes Loch 25b im Aufweitstopfen 18 gebildet. Beim Vorhandensein der Sollbruchstelle 37 erstreckt sich das Durchgangsloch als Sackloch über die Sollbruchstelle 37 hinaus, so daß nach dem Abriß der Durchgang gewährleistet ist.

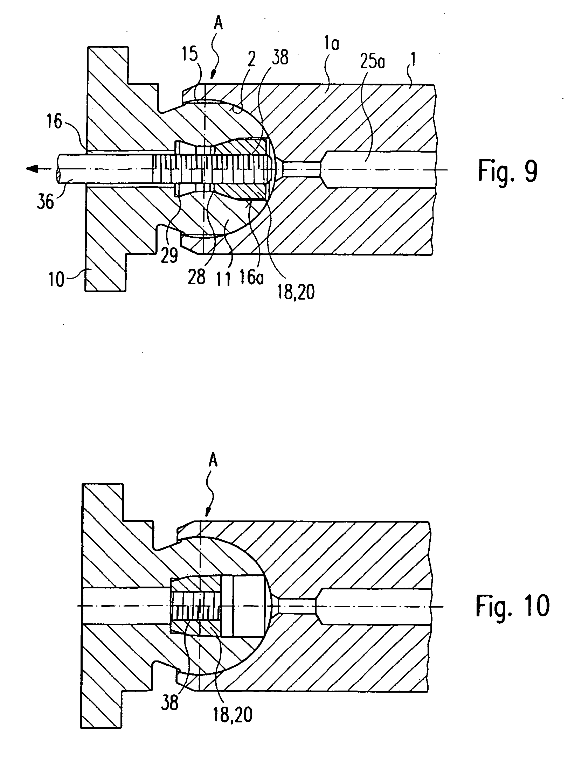

Beim Ausführungsbeispiel nach Fig. 9 und 10 ist die lösbare Verbindung zwischen dem Aufweitstopfen 18 und der Zugstange 36 durch eine Schraubverbindung gebildet. Hierzu kann der Aufweitstopfen 18 eine Gewindebohrung 38 aufweisen, in die die Zugstange 36 mit einem endseitigen Gewindeabschnitt gemäß Fig. 9 eingeschraubt ist und gemäß Fig. 10 entfernt ist.

## Patentansprüche

1. Gelenkverbindung (A) zwischen einem Schaft und einem Gleitschuh (10) einer Kolbenmaschine, insbesondere einer Axialkolbenmaschine, mit einem ersten Gelenkteil mit einem kugelförmigen Kopf (11) und einem zweiten Gelenkteil, das eine kugelabschnittförmige, den Kopf (11) aufnehmende Ausnehmung (2) und einen die Öffnung der Ausnehmung (2) umgebenden Randbereich (6) aufweist, der den Kopf (11) hintergreift, wobei der Kopf (11) ein etwa axiales Loch (16) und in seinem mittleren Äquatorbereich einen Kopfbereich aufweist, der aus einer abgeflachten Kugelkopfform durch ein im Loch (16) wirksames Dehnungsmittel radial über seine Elastizitätsgrenze hinaus gedehnt worden ist,
**dadurch gekennzeichnet,**
**daß** der Kopfbereich in seinem Elastizitätsbereich durch ein im Loch (16) bleibend positioniertes und den Kopfbereich gegen seine radiale elastische Kontraktion stützendes Stützteil (20) gestützt ist.

2. Gelenkverbindung nach Anspruch 1,
**dadurch gekennzeichnet,**
**daß** das Loch (16) das zugehörige Gelenkteil zu einem oder zu beiden Enden hin durchsetzt und das Stützteil (20) durch einen eingeschobenen Aufweitstopfen (18) gebildet ist.

3. Gelenkverbindung nach Anspruch 1 oder 2,
**dadurch gekennzeichnet,**
**daß** das Stützteil (20) durch eine Sicherungsvorrichtung (21) gegen eine unbeabsichtigte Verschiebung im Loch (16) gesichert ist.

4. Gelenkverbindung nach Anspruch 3,
**dadurch gekennzeichnet,**
**daß** die Sicherungsvorrichtung (21) form- und/oder kraftschlüssig wirksam ist.

5. Gelenkverbindung nach Anspruch 4,
**dadurch gekennzeichnet,**
**daß** die Sicherungsvorrichtung (21) durch eine Verrastungsvorrichtung gebildet ist.

6. Gelenkverbindung nach Anspruch 4 oder 5,
**dadurch gekennzeichnet,**
**daß** die Sicherungsvorrichtung (21) nur in einer Achsrichtung wirksam ist und durch einen Bewegungsanschlag zur Begrenzung der Einschiebbewegung des Stützteils (20) in das Loch (16) gebildet ist.

7. Gelenkverbindung nach Anspruch 6,
**dadurch gekennzeichnet,**
**daß** die Sicherungsvorrichtung (21) im Bereich des zugehörigen Gelenkteils außerhalb des Kopfes (11) angeordnet ist.

8. Gelenkverbindung nach Anspruch 6 oder 7,
**dadurch gekennzeichnet,**
**daß** das Stützteil (20) von der Scheitelseite des Kopfes (11) oder von der gegenüberliegenden Seite her in das Loch (16) einschiebbar ist.

9. Gelenkverbindung nach einem der Ansprüche 6 bis 8,
**dadurch gekennzeichnet,**
**daß** der Bewegungsanschlag durch aneinanderliegende Schulterflächen (28, 29) am Dorn (18) und im Loch (16) gebildet ist.

10. Gelenkverbindung nach einem der vorhergehenden Ansprüche,
**dadurch gekennzeichnet,**
**daß** der Kopf (11) am Gleitschuh (10) und die Ausnehmung (2) im Schaft angeordnet sind oder umgekehrt.

11. Gelenkverbindung nach einem der vorhergehenden Ansprüche,
**dadurch gekennzeichnet,**
**daß** der Schaft durch einen Kolben (1) der Kolbenmaschine gebildet ist und vorzugsweise ein axiales Durchgangsloch (25a) aufweist.

12. Gelenkverbindung nach Anspruch 11,
**dadurch gekennzeichnet,**
**daß** auch das Stützteil (20) ein axiales Durchgangsloch (25b) aufweist.

13. Gelenkverbindung nach Anspruch 11 oder 12,
**dadurch gekennzeichnet,**
**daß** in dem Durchgangsloch (25a) im Kolben (1) und/oder im Durchgangsloch (26b) im Stützteil (18, 20) eine Drossel (26) angeordnet ist.

14. Verfahren zum Herstellen einer Kugelgelenkverbindung (A) zwischen einem Gleitschuh (10) und einem Zylinderkolben (1) einer Kolbenmaschine mit folgenden Verfahrensschritten:
- Formen einer sphärischen, kalottenförmigen Ausnehmung (2) an dem Zylinderkolben (1) oder dem Gleitschuh (10), wobei die Ausnehmung (2) so hinterschnitten ist, daß die kalottenförmige Ausnehmung (2) einen Raumwinkelbereich W1 von mehr als 180° umfaßt und der Durchmesser (D) im Bereich der Äquatorebene (5) größer ist als der Öffnungsdurchmesser (d) der Ausnehmung (2),
- Formen eines sphärischen Kugelkopfes (11) an dem Gleitschuh (10) oder dem zylinderkolben (1), so daß der Kugelkopf (11) in einen mittleren Kopfbereich (d) parallel zu seiner Längsachse eine Abflachung (15) aufweist und der Durchmesser (d) im Bereich der Abflachung (b) kleiner oder annähernd gleich dem Öffnungsdurchmesser (d) der kalottenförmigen Ausnehmung (2) ist,
Einführen des Kugelkopfes (11) in die Ausnehmung (2) und plastisches Dehnen des Kugelkopfes im Kopfbereich (b) durch ein Einführen eines Dehnungsmittels in ein Loch (16) im Kugelkopf (11), bis der Ausnehmungsrand (6) den Kugelkopf (11) hintergreift,
**dadurch gekennzeichnet,**
**daß** ein den Kugelkopf (11) in seinem Kopfbereich (b) dehnender Aufweitstopfen (18) in das Loch (16) eingeführt und darin belassen wird.

15. Verfahren nach Anspruch 14,
**dadurch gekennzeichnet,**
**daß** die Außen-Oberfläche des Kugelkopfes (11) an die sphärische Innen-Oberfläche der kalottenförmigen Ausnehmung (2) angepaßt wird.

16. Verfahren nach Anspruch 14 oder 15,
**dadurch gekennzeichnet,**
**daß** der Kugelkopf (11) am Gleitschuh (10) vorgeformt wird und der Aufweitstopfen (18) auf eine den Gleitschuh (10) nicht überragende Länge abgelängt wird oder mit einer Länge (L) vorgefertigt wird, die gleich oder kleiner ist als die Höhe (H) des Gleitschuhs (10).

## Claims

1. A ball-and-socket joint (A) between a shaft and a guide shoe (10) of a piston machine, particularly an axial piston machine, having a first joint part with a spherical head (11) and a second joint part having a cutout (2), which is in the form of a spherical segment and receives the head (11), and an edge region (6) which surrounds the opening of the cutout (2) and reaches behind the head (11), the head (11) having an approximately axial hole (16) and, in its central equator region, a head region which has been expanded radially beyond its elastic limit from a flattened spherical head shape by an expansion means acting in the hole (16),
**characterised in that**
the head region is supported in its elastic region by a supporting part (20) which remains positioned in the hole (16) and supports the head region against its radial elastic contraction.

2. A ball-and-socket joint according to Claim 1,
**characterised in that**
the hole (16) passes through the associated joint part to one or both ends and the supporting part (20) is formed by an inserted expanding plug (18).

3. A ball-and-socket joint according to Claim 1 or 2,
**characterised in that**
the supporting part (20) is secured against inadvertent displacement in the hole (16) by a securing device (21).

4. A ball-and-socket joint according to Claim 3,
**characterised in that**
the securing device (21) operates with form and/or force fit.

5. A ball-and-socket joint according to Claim 4,
**characterised in that**
the securing device (21) is formed by a latching device.

6. A ball-and-socket joint according to Claim 4 or 5,
**characterised in that**
the securing device (21) only operates in an axial direction and is formed by a movement stop for delimiting the insertion movement of the supporting part (20) into the hole (16).

7. A ball-and-socket joint according to Claim 6,
**characterised in that**
the securing device (21) is arranged in the region of the associated joint part outside the head (11).

8. A ball-and-socket joint according to Claim 6 or 7,
**characterised in that**
the supporting part (20) may be inserted into the hole (16) from the vertex side of the head (11) or from the opposite side.

9. A ball-and-socket joint according to one of Claims 6 to 8,
**characterised in that**
the movement stop is formed by mutually abutting shoulder faces (28, 29) on the mandrel (18) and in the hole (16).

10. A ball-and-socket joint according to one of the preceding claims,
**characterised in that**
the head (11) is arranged on the guide shoe (10) and the cutout (2) is arranged in the shaft, or vice versa.

11. A ball-and-socket joint according to one of the preceding claims,
**characterised in that**
the shaft is formed by a piston (1) of the piston machine and preferably has an axial through hole (25a).

12. A ball-and-socket joint according to Claim 11,
**characterised in that**
the supporting part (20) also has an axial through hole (25b).

13. A ball-and-socket joint according to Claim 11 or 12,
**characterised in that**
a throttle (26) is arranged in the through hole (25a) in the piston (1) and/or in the through hole (26b) in the supporting part (18, 20).

14. A process for manufacturing a ball-and-socket joint (A) between a guide shoe (10) and a cylinder piston (1) of a piston machine, having the following process steps:
- forming a spherical, dome-shaped cutout (2) in the cylinder piston (1) or the guide shoe (10), the cutout (2) being undercut such that the dome-shaped cutout (2) encompasses a solid angle range W1 of more than 180° and the diameter (D) in the region of the equator plane (5) is greater than the opening diameter (d) of the cutout (2),
- forming a spherical ball head (11) on the guide shoe (10) or the cylinder piston (1) so that the ball head (11) has a flattened portion (15) in a central head region (d) parallel to its longitudinal axis and the diameter (d) in the region of the flattened portion (b) is smaller than or approximately equal to the opening diameter (d) of the dome-shaped cutout (2),
introducing the ball head (11) into the cutout (2) and plastically expanding the ball head in the head region (b) by introducing an expansion means into a hole (16) in the ball head (11) until the edge (6) of the cutout reaches behind the ball head (11),
**characterised in that**
an expanding plug (18) expanding the ball head (11) in its head region (b) is introduced into the hole (16) and left therein.

15. A process according to Claim 14,
**characterised in that**
the outer surface of the ball head (11) is adapted to the spherical inner surface of the dome-shaped cutout (2).

16. A process according to Claim 14 or 15,
**characterised in that**
the ball head (11) is preformed on the guide shoe (10) and the expanding plug (18) is cut to a length which does not project beyond the guide shoe (10) or is prefabricated with a length (L) which is equal to or smaller than the height (H) of the guide shoe (10).

## Revendications

1. Liaison articulée (A) entre un arbre et un patin coulissant (10) d'une machine à pistons, en particulier d'une machine à pistons axiaux, comprenant une première partie d'articulation avec une tête (11) de forme sphérique et une deuxième partie d'articulation, qui présente un évidement (2) en forme de tronçon de sphère recevant la tête (11) et une zone de bordure (6) qui entoure l'ouverture de l'évidement (2) et qui engage la tête (11) par l'arrière, ladite tête (11) présentant un trou sensiblement axial (16) et, dans sa région équatoriale médiane, une zone de tête qui a été allongée radialement au-delà de sa limite élasticité, à partir d'une forme en tête sphérique aplatie, au moyen d'un organe d'allongement agissant dans le trou (16),
**caractérisée en ce que**
la zone de tête est soutenue dans sa zone d'élasticité par une pièce de soutien (20) positionnée de façon permanente dans le trou (16) et soutenant la zone de tête à l'encontre de sa contraction élastique radiale.

2. Liaison articulée selon la revendication 1,
**caractérisée en ce que** le trou (16) traverse la partie d'articulation associée vers une ou vers les deux extrémités, et la pièce de soutien (20) est formée par un bouchon d'élargissement (18) introduit dans le trou.

3. Liaison articulée selon la revendication 1 ou 2,
**caractérisée en ce que** la pièce de soutien (20) est bloquée dans le trou (16) à l'encontre d'un déplacement non désiré au moyen d'un dispositif de blocage (21).

4. Liaison articulée selon la revendication 3,
**caractérisée en ce que** le dispositif de blocage (21) agit par coopération de formes et/ou par coopération de forces.

5. Liaison articulée selon la revendication 4,
**caractérisée en ce que** le dispositif de blocage (21) est formé par un dispositif à enclenchement.

6. Liaison articulée selon la revendication 4 ou 5,
**caractérisée en ce que** le dispositif de blocage (21) n'agit que dans une direction axiale et est formé par une butée de déplacement destinée à limiter le déplacement d'introduction de la pièce de soutien (20) dans le trou (16).

7. Liaison articulée selon la revendication 6,
**caractérisée en ce que** le dispositif de blocage (21) est agencé dans la zone de la partie d'articulation associée à l'extérieur de la tête (11).

8. Liaison articulée selon la revendication 6 ou 7,
**caractérisée en ce que** la pièce de soutien (20) est susceptible d'être introduite dans le trou (16) depuis le côté du sommet de la tête (11) ou depuis le côté opposé.

9. Liaison articulée selon l'une quelconque des revendications 6 à 8,
**caractérisée en ce que** la butée de déplacement est formée par des surfaces d'épaulement (28, 29) juxtaposées sur la broche (18) et dans le trou (16).

10. Liaison articulée selon l'une quelconque des revendications précédentes,
**caractérisée en ce que** la tête (11) est agencée sur le patin coulissant (10) et l'évidement (2) est agencé dans l'arbre, ou inversement.

11. Liaison articulée selon l'une quelconque des revendications précédentes,
**caractérisée en ce que** l'arbre est formé par un piston (1) de la machine à pistons et présente de préférence un trou traversant axial (25a).

12. Liaison articulée selon la revendication 11,
**caractérisée en ce que** la pièce de soutien (20) présente également un trou traversant axial (25b).

13. Liaison articulée selon la revendication 11 ou 12,
**caractérisée en ce qu'**un étranglement (26) est agencé dans le trou traversant (25a) du piston (1) et/ou dans le trou traversant (26b) de la pièce de soutien (18, 20).

14. Procédé pour réaliser une liaison à articulation sphérique (A) entre un patin coulissant (10) et un piston cylindrique (1) d'une machine à pistons, comportant les étapes de procédé suivantes :
- formation d'un évidement sphérique (2) en forme de calotte sur le piston cylindrique (1) ou sur le patin coulissant (10), l'évidement (2) présentant une contre-dépouille telle que l'évidement (2) en forme de calotte couvre une plage angulaire dans l'espace W1 supérieure à 180°, et le diamètre (D) dans la région du plan équatorial (5) est supérieur au diamètre d'ouverture (d) de l'évidement (2),
- formation d'une tête sphérique (11) sur le patin coulissant (10) ou sur le piston cylindrique (1) de sorte que la tête sphérique (11) présente, dans une zone de tête médiane (d) et parallèlement à son axe longitudinal, un aplatissement (15) et le diamètre (d) dans la région de l'aplatissement (b) est inférieur ou approximativement égal au diamètre d'ouverture (d) de l'évidement (2) en forme de calotte,
- introduction de la tête sphérique (11) dans l'évidement (2) et allongement plastique de la tête sphérique dans la zone de tête (b) par introduction d'un organe d'allongement dans un trou (16) dans la tête sphérique (11) jusqu'à ce que la bordure (6) de l'évidement engage la tête sphérique (11) par l'arrière,
**caractérisé en ce qu'**un bouchon d'élargissement (18) qui allonge la tête sphérique (11) dans sa zone de tête (b) est introduit dans le trou (16) et laissé dans celui-ci.

15. Procédé selon la revendication 14,
**caractérisé en ce que** la surface extérieure de la tête sphérique (11) est adaptée à la surface intérieure sphérique de l'évidement (2) en forme de calotte.

16. Procédé selon la revendication 14 ou 15,
**caractérisé en ce que** la tête sphérique (11) est préformée sur le patin coulissant (10) et le bouchon d'élargissement (18) est recoupé à une longueur qui ne dépasse pas le patin coulissant (10), ou est préfabriqué avec une longueur (L) qui est égale ou inférieure à la hauteur (H) du patin coulissant (10).
